# EUROPÄISCHE PATENTSCHRIFT

(11) **EP 1 799 499 B1**
(45) Veröffentlichungstag und Bekanntmachung des Hinweises auf die Patenterteilung: **02.06.2010**
(21) Anmeldenummer: 05793031.5
(22) Anmeldetag: 07.10.2005
(51) Int. Cl.: B60N 2/225, B60N 2/20, B60N 2/235

(54) **BESCHLAG FÜR EINEN FAHRZEUGSITZ**
FITTING FOR A VEHICLE SEAT
FERRURE DE SIEGE DE VEHICULE

(30) Priorität: 14.10.2004 DE 102004049991
(43) Veröffentlichungstag der Anmeldung: 27.06.2007
(73) Patentinhaber: KEIPER GmbH & Co. KG, 67657 Kaiserslautern (DE)
(72) Erfinder: THIEL, Peter, 42899 Remscheid (DE); VEDDER, Andreas, 42781 Haan (DE)
(74) Vertreter: Patentanwälte Hosenthien-Held und Dr. Held
(86) Internationale Anmeldenummer: PCT/EP2005/010824
(87) Internationale Veröffentlichungsnummer: WO 2006/042647

(56) Entgegenhaltungen:
- US-A- 5 611 599
- US-A- 5 755 491
- US-A- 6 164 723

## Beschreibung

Die Erfindung betrifft einen Beschlag für einen Fahrzeugsitz, insbesondere für einen Kraftfahrzeugsitz, mit den Merkmalen des Oberbegriffs des Anspruches 1.

Die US 5,755,491 A beschreibt einen Beschlag dieser Art, bei dem ein Getriebbeschlag und ein Rastbeschlag axial versetzt zueinander angeordnet sind. Die beiden ersten Beschlagteile sind unabhängig voneinander und einerseits am Sitzteil und andererseits an der Lehne eines Fahrzeugsitzes angebracht, während das zweite Beschlagteil mittig angeordnet und beiden Einzelbeschlägen gemeinsam ist. Ein gemeinsamer Umklammerungsring übergreift die beiden ersten Beschlagteile. vorgesehen und weist jeweils Führungen für die jeweiligen Riegel auf. Bei einem aus der US 5,997,090 A bekannten Beschlag sind zwei Rastbeschläge bezüglich der Achsen radial versetzt zu einander angeordnet. Die ersten Beschlagteile sind unabhängig voneinander sind, während das zweite Beschlagteil beiden Einzelbeschlägen gemeinsam ist. Die US 6,164,723 A zeigt eine Kombination eines Rastbeschlags mit einer memorisierten Freischwenkvorrichtung, die axial versetzt zum Rastbeschlag angeordnet ist. Die US 5,611,599 A offenbart eine memorisierte Freischwenkvorrichtung, die mit einem axial versetzten Rastbeschlag oder Getriebebeschlags kombiniert ist, wobei ein gemeinsamer Umklammerungsring vorgesehen ist.

Die nachveröffentlichte WO 2006/011649 A2 offenbart einen Beschlag, welcher einen Getriebebeschlag und einen Rastbeschlag enthält, die axial versetzt zueinander angeordnet sind. Die beiden ersten Beschlagteile sind unabhängig voneinander und einerseits am Sitzteil und andererseits an der Lehne eines Fahrzeugsitzes angebracht, während das zweite Beschlagteil mittig angeordnet und beiden Einzelbeschlägen gemeinsam ist.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Indem die Einzelbeschläge bezüglich einer gemeinsamen ersten Achse axial versetzt zueinander angeordnet sind, ist der radiale Bauraumbedarf geringer, womit bei einem Fahrzeugsitz oberhalb des Beschlags beispielsweise Bauraum für einen Seitenairbag zur Verfügung steht. Der Einsatz erfolgt vorzugsweise bei der Lehne des Fahrzeugsitzes, um die Lehne in mehrere Gebrauchsstellungen und wenigstens eine Nichtgebrauchsstellung zu bringen, jedoch sind auch andere Anwendungen denkbar.

Als Einzelbeschläge sind ein Getriebebeschlag und ein Rastbeschlag vorgesehen, welche vorzugsweise in Scheibenform ausgebildet sind. Der beispielsweise als Exzenterumlaufgetriebe ausgebildete Getriebebeschlag bildet für sich bereits einen Neigungseinsteller, um die Lehne in mehrere Gebrauchsstellungen zu bringen. Durch die Bauart des Getriebebeschlags bedingt gehen die Gebrauchsstellungen stufenlos ineinander über und werden durch die Selbsthemmung des Getriebebeschlags gehalten. Der vorzugsweise mit radial verschieblichen Riegeln versehene Rastbeschlag bildet ebenfalls einen Neigungseinsteller, dient vorliegend aber lediglich als Klappbeschlag, um die Lehne von einer eingestellten Gebrauchsstellungen in die Nichtgebrauchsstellungen zu bringen.

Beide Einzelbeschläge weisen jeweils ein erstes und ein zweites Beschlagteil auf. Die ersten Beschlagteile sind beispielsweise mit Erhebungen versehen, während die zweiten Beschlagteile als Hohlräder ausgebildet sind. Vorzugsweise sind das zweite Getriebebeschlagteil und das zweite Rastbeschlagteil wenigstens drehfest miteinander verbunden und entsprechend direkt axial benachbart angeordnet, wobei auch andere Anordnungen und Verbindungen (z.B. Schweißen) denkbar sind.

Erfindungsgemäß ist eine Steuereinrichtung vorgesehen, welche das Verriegeln des Rastbeschlags in Abhängigkeit der Winkelstellungen der Beschlagteile relativ zueinander steuert, insbesondere bei einem Einsatz für die Lehne eines Fahrzeugsitzes das Verriegeln auf bestimmte Gebrauchs- und Nichtgebrauchsstellungen beschränkt. Die Steuereinrichtung weist Mittel zum Ausgleich einer Taumelbewegung des Getriebebeschlags auf, beispielsweise eine Schlitz-Zapfen-Führung oder ein Planetengetriebe. In diesem Zusammenhang weist die Steuereinrichtung vorzugsweise Ringe auf, welche mittels Steuernocken mit den vorgesehenen Riegeln des Rastbeschlags zusammenwirken, d.h. die radiale Beweglichkeit einschränken, wobei ein Ring durch die Mittel zum Ausgleich der Taumelbewegung in konstanter Winkelstellung zum ersten Getriebebeschlagteil des Beschlags gehalten wird, also nicht mittaumelt, während ein weiterer Ring in konstanter Winkelstellung zum zweiten Getriebebeschlagteil und damit zum Rastbeschlag bleibt.

Für eine kraftschlüssige Sicherung der Nichtgebrauchsstellungen ist beispielsweise eine mit dem zweiten Rastbeschlagteil verbundene Verlängerungsbuchse vorgesehen, welche zum Einhängen einer Totpunktfeder dient, die an ihrem anderen Ende in Verbindung mit dem ersten Rastbeschlagteil steht, jeweils den Übergang in die Endstellungen einer Schwenkbewegung unterstützt und dazwischen eine Totpunktlage aufweist.

Bei dem erfindungsgemäßen Beschlag ist vorzugsweise ein gemeinsamer Umklammerungsring, welcher die Einzelbeschläge umschließt und/oder übergreift, oder ein sonstiges gemeinsames Gehäuse vorgesehen. Es ist aber auch möglich, dass jeder Einzelbeschlag seine eigenen Teilumklammerungsringe oder Teilumklammerungssegmente aufweist, welche jeweils die ihnen zugeordneten Einzelbeschläge umschließen und/oder übergreifen.

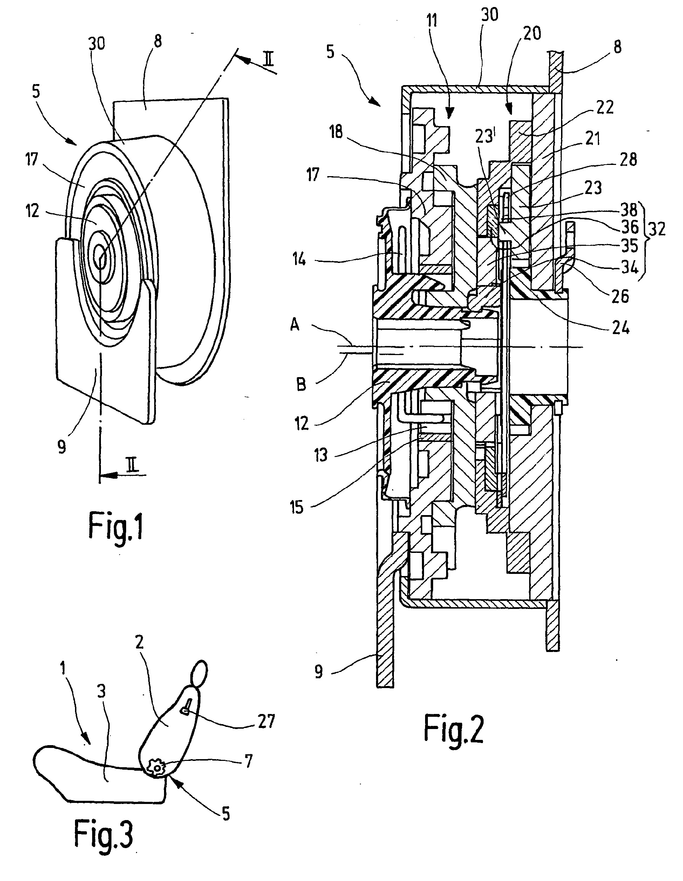

Im folgenden ist die Erfindung anhand eines in der Zeichnung dargestellten Ausführungsbeispiels mit vier Abwandlungen näher erläutert. Es zeigen
- Fig. 1: eine perspektivische Ansicht des Ausführungsbeispiels,
- Fig. 2: einen Schnitt durch das Ausführungsbeispiel entlang der Linie II-II in Fig. 1,
- Fig. 3: eine schematische Darstellung eines Fahrzeugsitzes,

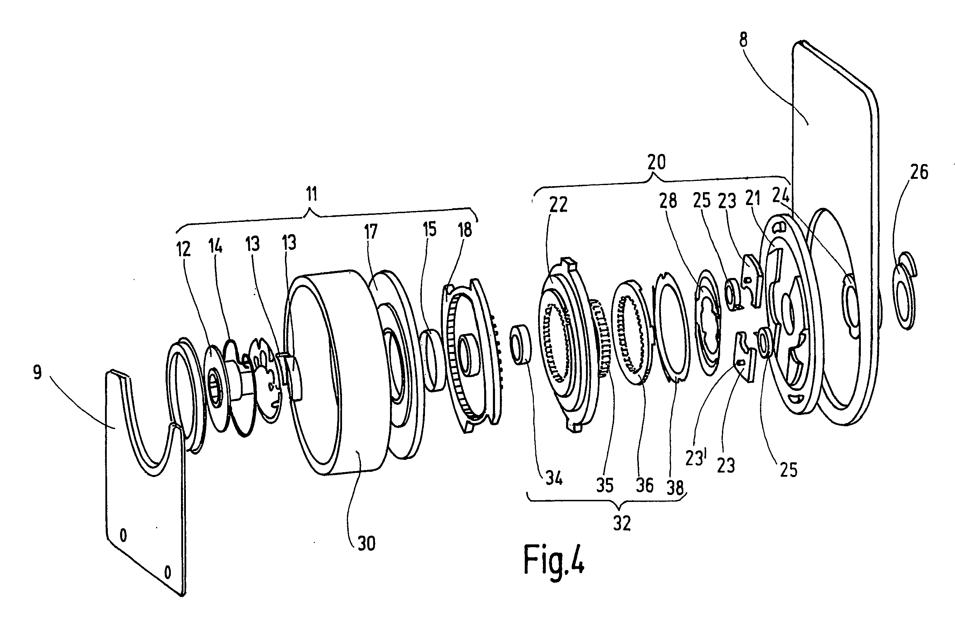

- Fig. 4: eine Explosionsdarstellung des Ausführungsbeispiels,
- Fig. 5: eine Darstellung einzelner Bauteile in der vordersten Gebrauchsstellung,
- Fig. 6: eine Darstellung entsprechend Fig. 5 in einer weiter nach hinten geneigten Gebrauchsstellung,
- Fig. 7: eine erste Abwandlung des Ausführungsbeispiels in einer Fig. 2 entsprechenden Darstellung unter Auslassung einiger Bauteile,
- Fig. 8: eine zweite Abwandlung des Ausführungsbeispiels in einer Fig. 2 entsprechenden Darstellung unter Auslassung einiger Bauteile,
- Fig. 9: einen perspektivisch dargestellten Zahnring gemäß einer dritten Abwandlung des Ausführungsbeispiels,
- Fig. 10: eine Seitenansicht des Zahnringes in Richtung des Pfeils X in Fig. 9, und
- Fig. 11: einen perspektivisch dargestellten Zahnring gemäß einer vierten Abwandlung des Ausführungsbeispiels.

Bei einem Fahrzeugsitz 1 ist die Lehne 2 in ihrer Neigung relativ zum Sitzteil 3 stufenlos in verschiedenen zum Einsitzen geeigneten Gebrauchsstellungen einstellbar. Zusätzlich kann die Lehne 2 je nach Anwendungsfall so geschwenkt werden, dass der Fahrzeugsitz 1 wenigstens eine zum Einsitzen nicht geeignete Nichtgebrauchsstellungen einnimmt. Beispielsweise kann die Lehne 2 nach vorne freischwenken, d.h. in eine Einstiegsstellung überführt werden, oder ebenfalls nach vorne in eine näherungsweise horizontale Tischstellung oder nach hinten in einer Liegestellung schwenken. Hierzu ist die Lehne 2 auf beiden Seiten mittels je eines Beschlags 5 am Sitzteil 3 angebracht.

Die beiden Beschläge 5 sind spiegelbildlich angeordnet und stehen unter anderem mittels einer horizontal verlaufenden, profilierten Übertragungsstange in einer später genauer beschriebenen Verbindung miteinander. Eine der Lehne 2 zugeordnete erste Achse A wird durch die Übertragungsstange definiert Die erste Achse A bildet zugleich die Schwenkachse für die Lehne 2 beim Freischwenken oder Schwenken in die Tischstellung oder Liegestellung. Zudem definiert die erste Achse A die verwendeten Richtungsangaben. Auf einer Seite des Fahrzeugsitzes 1 sitzt auf der Übertragungsstange ein Handrad 7, mittels welchem die Übertragungsstange um die erste Achse A drehbar ist.

Jeder Beschlag 5 weist ein mit der Lehne 2 verbundenes Beschlagoberteil 8 und ein mit dem Sitzteil 3 verbundenes Beschlagunterteil 9 auf. Zwischen dem Beschlagunterteil 9 und dem Beschlagoberteil 8 weist der Beschlag 5 in axialer Richtung, d.h. in Richtung der ersten Achse A, zunächst Funktionsteile eines an sich bekannten, als Einzelbeschlag voll funktionsfähigen Getriebebeschlags 11 auf, der als Exzenterumlaufgetriebe ausgebildet ist.

Ein um die erste Achse A drehbarer erster Mitnehmer 12 greift mit einem angeformten Mitnehmersegment mit Spiel zwischen die Schmalseiten zweier auf dem ersten Mitnehmer 12 mittels ihrer gekrümmten Innenflächen gelagerter Keilsegmente 13. Die einander zugekehrten Breitseiten der Keilsegmente 13 nehmen mit je einer durch vorspringende Materialpartien definierten Ausnehmung jeweils einen in axialer Richtung abgewinkelten Endfinger einer Ringfeder 14 auf, welche die Keilsegmente 13 in Umfangsrichtung auseinanderdrückt. Der erste Mitnehmer 12 mit seinem Mitnehmersegment und die Keilsegmente 13 definieren einen Exzenter.

Die gekrümmten Außenseiten der Keilsegmente 13 und des Mitnehmersegments gleiten in einer Gleitlagerbuchse 15, welche in ein erstes Getriebebeschlagteil 17 gepresst ist. Das erste Getriebebeschlagteil 17 ist näherungsweise scheibenförmig und mit einem ausgeprägten, außenverzahnten Zahnrad versehen. Auf der vom Zahnrad abgewandten Seite des ersten Getriebebeschlagteils 17 liegt radial innen der erste Mitnehmer 12 mit einem angeformten Teller und einer elastischen Dichtlippe an, während radial weiter außen das Beschlagunterteil 9 mit dem ersten Getriebebeschlagteil 17 verbunden ist. Der erste Mitnehmer 12 ist in einem auf der ersten Achse A liegenden Kragenzug eines zweiten Getriebebeschlagteils 18 gelagert. Das zweite Getriebebeschlagteil 18 ist als Hohlrad ausgebildet und ist mit einem eine Innenverzahnung definierenden Zahnkranz versehen, welcher relativ zum Zahnrad einen um wenigstens eine Zahnhöhe größeren Durchmesser und eine um wenigstens eins höhere Anzahl von Zähnen aufweist.

Eine Drehung des ersten Mitnehmers 12 um die erste Achse A führt zu einer Abwälzbewegung von Zahnrad und Zahnkranz, welche sich als Relativdrehung von erstem Getriebebeschlagteil 17 und zweitem Getriebebeschlagteil 18 mit überlagerter Taumelbewegung darstellt. Aufgrund seiner Lagerung taumelt der erste Mitnehmer 12 ebenfalls, so dass die erste Achse A ihre Position ändert. Ortsfest hingegen bleiben das sitzteilfeste Beschlagunterteil 9 und das erste Getriebebeschlagteil 17, dessen Zahnrad eine ebenfalls ortsfeste, zur ersten Achse A parallele zweite Achse B definiert.

In axialer Richtung anschließend an den Getriebebeschlag 11 und benachbart versetzt zu diesem weist der Beschlag 5 Funktionsteile eines an sich bekannten, als Einzelbeschlag voll funktionsfähigen Rastbeschlags 20 auf. Am Beschlagoberteil 8 ist ein scheibenförmiges, mit der ersten Achse A fluchtendes erstes Rastbeschlagteil 21 angebracht, welches auf der dem Getriebebeschlag 11 zugewandten Seite vorspringende Führungs- und Lagersegmente aufweist, welche einerseits ein ebenfalls scheibenförmiges zweites Rastbeschlagteil 22 lagern und andererseits zwei gezahnte, flache Riegel 23 in radialer Richtung führen. Jeder Riegel 23 weist eine parallel zur Achse A abstehende Nase 23' auf, die vorliegend am Riegel 23 angeformt ist.

Ein mit exzentrischen Nocken versehener, im ersten Rastbeschlagteil 21 gelagerter und um die erste Achse A drehbarer zweiter Mitnehmer 24 ist durch Federn 25 vorgespannt und drückt die Riegel 23 radial nach außen, wo sie mit dem als Hohlrad ausgebildeten zweiten Rastbeschlagteil 22 zusammenwirken, um den Rastbeschlag 20 zu verriegeln. Ein Betätigungsring 26, welcher auf der vom Getriebebeschlag 11 abgewandten Seite des ersten Rastbeschlagteils 21 drehfest auf dem zweiten Mitnehmer 24 sitzt, steht mit einem seitlich an der Lehne 2 vorgesehenen Betätigungshebel 27 in Wirkverbindung und ist von diesem mit einem Drehmoment beaufschlagbar, so dass der zweite Mitnehmer 24 entgegen der Vorspannung der Federn 25 drehbar ist. Eine auf dem zweiten Mitnehmer 24 sitzende Steuerscheibe 28 zieht bei einer solchen Drehung mit ihren Kulissen die Riegel 23 mittels deren Nasen 23' radial nach innen, so dass der Rastbeschlag 20 entriegelt wird. Das erste Rastbeschlagteil 21 ist dann relativ zum zweiten Rastbeschlagteil 22 um die erste Achse A verdrehbar. Wenn der Betätigungsring 26 nicht länger beaufschlagt wird, sorgen die Federn 25 für ein erneutes Verriegeln des Rastbeschlags 20.

Das zweite Rastbeschlagteil 22 ist mit dem ihm zugewandten zweiten Getriebebeschlagteil 18 drehfest verbunden, beispielsweise verschweißt. Ein reifenartiger Umklammerungsring 30, welcher mit dem ersten Rastbeschlagteil 21 und/oder dem Beschlagoberteil 8 verbunden ist, insbesondere verschweißt ist, und mit der ersten Achse A fluchtet, übergreift die Funktionsteile des Getriebebeschlags 11 und des Rastbeschlags 20 auf der radialen Außenseite. Dabei übergreift er das erste Getriebebeschlagteil 17 mit soviel radialem Spiel, dass die Taumelbewegung ungehindert durchgeführt werden kann.

Um das Verriegeln des Rastbeschlags 20 auf bestimmte Winkelbereiche oder -stellungen, d.h. die Gebrauchsstellungen, Einstiegsstellung, Tischstellung, Liegestellung, einzuschränken oder erst in diesen Winkelstellungen zu ermöglichen, ist eine Steuereinrichtung 32 vorgesehen. Die Steuereinrichtung 32 umfasst eine Exzenterbuchse 34, welche drehfest auf dem ersten Mitnehmer 12 sitzt, wobei die Exzentrizität der Exzenterbuchse 34 radial entgegengesetzt zur Exzentrizität der Keilsegmente 13 ist. Auf der Exzenterbuchse 34 sitzt gleitend ein Ritzel 35, welches unter Bildung eines Planetengetriebes sowohl mit einer am zweiten Rastbeschlagteil 22 ausgebildeten Innenverzahnung als auch mit einem Zahnring 36 kämmt. Die Zähnezahlen der beiden letztgenannten Verzahnungen entsprechen denjenigen des Getriebebeschlags 11. Der im zweiten Rastbeschlagteil 22 drehbar gelagerte Zahnring 36 weist an zwei gegenüberliegenden Stellen je einen ersten Steuernocken 37 auf, welcher jeweils in Umfangsrichtung verläuft und radial nach innen vorspringt. Ein im zweiten Rastbeschlagteil 22 drehfest gelagerter, gegenüber dem Zahnring 36 um die Materialstärke axial versetzter Steuerring 38 weist an zwei gegenüberliegenden Stellen je einen zweiten Steuernocken 39 auf, welcher jeweils in Umfangsrichtung verläuft und radial nach innen vorspringt.

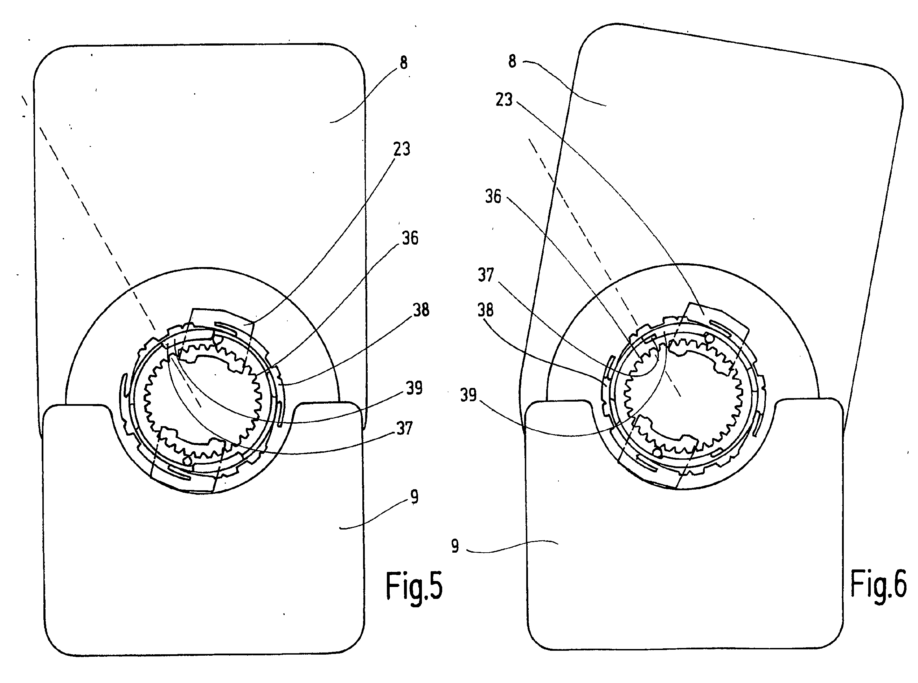

Bei einer Drehung des ersten Mitnehmers 12 gleicht das Planetengetriebe in der Steuereinrichtung 32 die Taumelbewegung des Getriebebeschlags 11 aus. Der Zahnring 36 wird dadurch bei einer Neigungseinstellung der Lehne 2 in konstanter Winkelstellung zum ersten Getriebebeschlagteil 17 (und damit zum Beschlagunterteil 9 und zum Sitzteil 3) gehalten, während der Steuerring 38 dabei dem zweiten Getriebebeschlagteil 18 (und letztendlich der Lehne 2) folgt. Der Sachverhalt ist aus Fig. 5 und 6 ersichtlich (Fahrtrichtung nach links), welche die vorderste Gebrauchsstellung (aufrechte Lehne 2) die Gebrauchsstellung nach einer Umdrehung des ersten Mitnehmers 12 (Lehne 2 leicht nach hinten geneigt) zeigen.

Die Steuernocken 37 und 39 wirken mit den Nasen 23' der Riegel 23 zusammen, wobei sie vorliegend die Bereiche des Nicht-Einfallens definieren, indem sie beim Schwenken der Lehne 2 bzw. des Beschlagoberteils 8 die sich um die erste Achse A mitdrehenden Nasen 23' der Riegel 23 radial nach innen drücken und somit ein Verriegeln des Rastbeschlags 20 verhindern. Dabei sind die ersten Steuernocken 37 für das Verriegeln in definierter Nichtgebrauchsstellung relevant (mit derem in Fig. 5 und 6 weiter gegen den Uhrzeigersinn gelegenen Ende), während die zweiten Steuernocken 39 den Einfall in den Gebrauchsstellungen steuern (mit derem weiter im Uhrzeigersinn gelegenen Ende). In Fig. 5 sind die Paare von Steuernocken 37 und 39 deckungsgleich, während in Fig. 6 der Steuerring 38 (mit der Lehne 2) relativ zum Zahnring 36 etwas nach hinten geschwenkt ist. Die Einstiegsstellung (als definierte Nichtgebrauchsstellung) hingegen, welche durch eine gestrichelte Linie angedeutet ist, bleibt in konstanter Winkelstellung relativ zum Sitzteil 3.

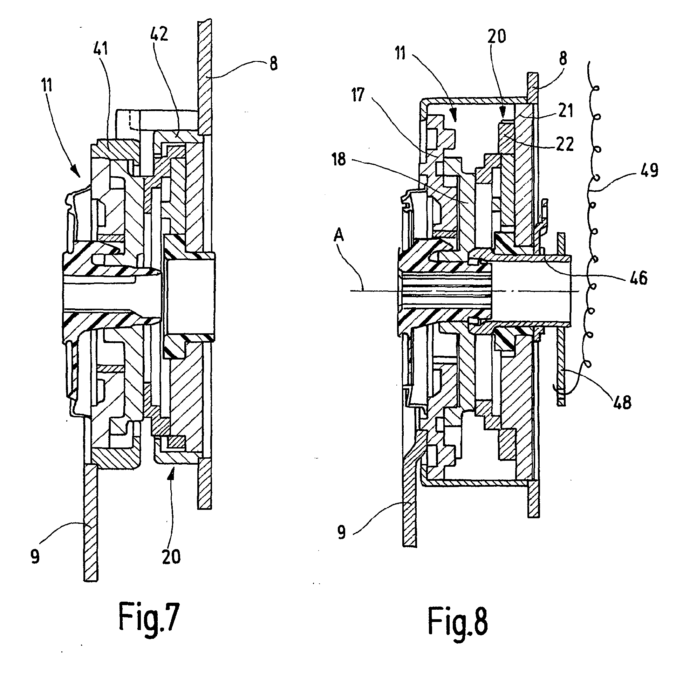

In einer ersten Abwandlung des Ausführungsbeispiels, welche nahezu gleich aufgebaut ist, weshalb gleiche Bauteile gleiche Bezugszeichen tragen, ist statt des gemeinsamen Umklammungsrings 30 für den Getriebebeschlag 11 ein erster Teilumklammerungsring 41 und für den Rastbeschlag 20 ein zweiter Teilumklammerungsring 42 vorgesehen, welche jeweils gesondert ausgebildet, in axialer Richtung nebeneinander angeordnet sind und unabhängig voneinander die ihnen zugeordneten Funktionsteile umklammern. Die Teilumklammerungsringe 41 und 42 brauchen nicht geschlossen sein und können jeweils mit mehreren Segmenten ausgebildet sein. Zur Begrenzung des Freischwenkens können, wie in Fig. 7 angedeutet, an den Teilumklammerungsringen 41 und 42 zusammenwirkende Anschläge vorgesehen sein.

Eine zweite Abwandlung des Ausführungsbeispiels ist wiederum nahezu gleich wie das Ausführungsbeispiel aufgebaut, weshalb gleiche Bauteile gleiche Bezugszeichen tragen, soweit sie in Fig. 8 dargestellt sind. Am zweiten Getriebebeschlagteil 18 (oder alternativ direkt an dem mit diesem verbundenen zweiten Rastbeschlagteil 22) ist eine Verbindungsbuchse 46 angebracht, welche mit radialem Abstand (Luft) durch den zweiten Mitnehmer 24 geführt ist und an ihrem freien Ende eine Befestigungslasche 48 trägt. In diese Befestigungslasche 48 kann eine Totpunktfeder 49 eingehängt werden, welche an ihrem anderen Ende an der Lehne 2 angebracht ist, also mit dem ersten Rastbeschlagteil 21 in Verbindung steht. Die Totpunktfeder 49 hat ihre größte Vorspannung bei einer Stellung der Lehne 2 zwischen der Gebrauchsstellung und der Einstiegsstellung, wobei dann ihre Wirklinie die Achse A kreuzt. In den anderen Stellungen der Lehne 2 unterstützt die Totpunktfeder 49 den Übergang in die Gebrauchsstellung bzw. die Einstiegsstellung, wobei sie letztere kraftschlüssig sichern kann. Die für eine Verriegelung der Einstiegsstellung mittels des Rastbeschlags 20 vorgesehene Steuereinrichtung 32 kann daher entfallen.

Die Steuereinrichtung 32 kann auch beim Ausführungsbeispiel selber und bei der ersten Abwandlung entfallen, wenn gar keine Sicherung der Einstiegsstellung gewünscht wird.

Für die Fälle, in denen eine Sicherung der Einstiegsstellung gewünscht wird, die zusätzlich sicher gegen einen Missbrauch ist, sind zwei weitere Abwandlungen des Ausführungsbeispiels vorgesehen. In der Einstiegsstellung könnte nämlich die Gefahr bestehen, dass der Getriebebeschlag 11 missbräuchlich zur Neigungseinstellung verwendet wird. In Bezug auf das erste Getriebebeschlagteil 17 bliebe der Zahnring 36 dann in konstanter Winkelstellung, während die Nasen 23' der Riegel 23 eine Winkeländerung erfahren würden, was aufgrund der Anlage der Nasen 23' an den ersten Steuernocken 37 je nach Winkelstellung des Getriebebeschlags 11 zu einer starken Belastung der Nasen 23' bzw. der ersten Steuernocken 37 bis hin zur Beschädigung führen würde.

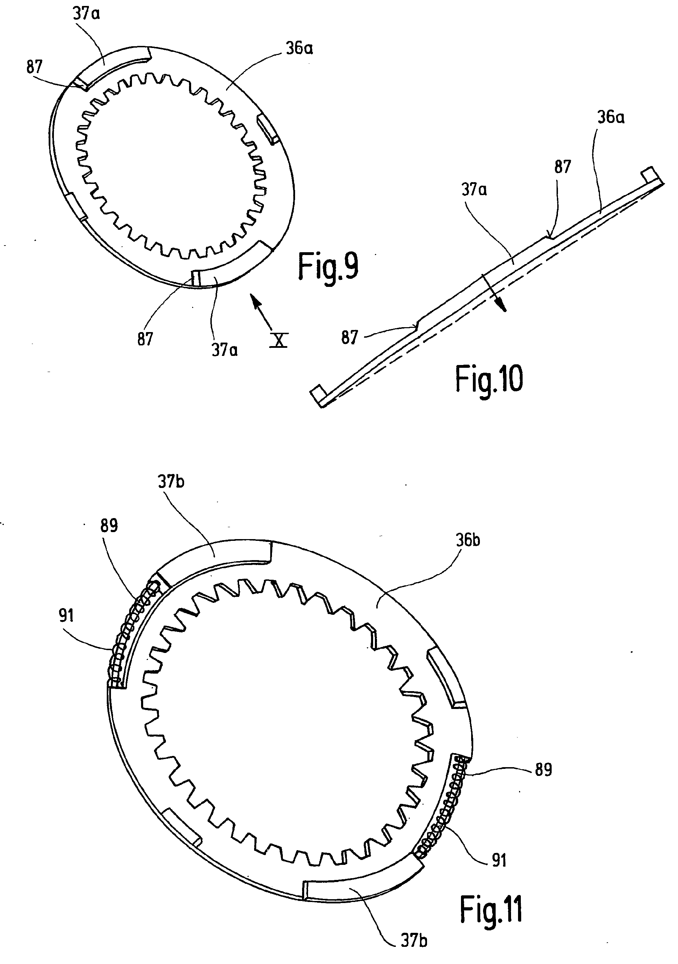

In einer dritten Abwandlung, welche fast vollständig mit dem Ausführungsbeispiel übereinstimmt, weshalb die abgewandelten, aber gleichwirkenden Bauteile um Buchstaben ergänzte Bezugszeichen tragen, ist ein Zahnring 36a vorgesehen, der in axialer Richtung flexibel ausgebildet ist, beispielsweise aus Federblech besteht. Der Zahnring 36a weist erste Steuernocken 37a auf, welche wie im Ausführungsbeispiel zum Zusammenwirken mit der Nasen 23' der Riegel 23 vorgesehen sind. In den in Umfangsrichtung gelegenen Enden der ersten Steuernocken 37a weisen diese jeweils eine Anlaufschräge 87 auf. Wird nun im Missbrauchsfall aufgrund der Richtung der Taumelbewegung des Getriebebeschlags 11 die Kraft zwischen den Nasen 23' und den ersten Steuernocken 37a zu groß, drücken die Nasen 23' über die Anlaufschrägen 87 den Zahnring 36a in axialer Richtung von sich weg, wie in Fig. 10 durch einen Pfeil angedeutet, was aufgrund der Flexibilität des Zahnrings 36a bzw. der flexiblen Ausbildung der ersten Steuernocken 37a am Zahnring 36a möglich ist, und gelangen auf den Rücken des jeweiligen ersten Steuernockens 37a. Damit wird eine Beschädigung wird vermieden, wenngleich die gespeicherte Ausgangsstellung verloren geht.

In einer vierten Abwandlung, welche ebenfalls fast vollständig mit dem Ausführungsbeispiel übereinstimmt, weshalb die abgewandelten, aber gleichwirkenden Bauteile um Buchstaben ergänzte Bezugszeichen tragen, ist ein Zahnring 36b vorgesehen, dessen erste Steuernocken 37b gesondert ausgebildet und relativ zum Grundkörper des Zahnrings 36b beweglich sind. Diese Steuernocken 37b sind jeweils in Umfangsrichtung über einen gewissen Winkelbereich hinweg beweglich mittels einer Nockenführung 89 geführt, vorliegend einem konzentrisch zum Zahnring 36b gekrümmten Draht, den die ersten Steuernocken 37b umschließen. Eine Nockenfeder 91 spannt jeweils einen ersten Steuernocken 37b in Richtung des einen Endes der Nockenführung 89 vor. Wird nun im Missbrauchsfall die Kraft zwischen den Nasen 23' und den ersten Steuernocken 37b zu groß, d.h. größer als die Vorspannung der Nockenfeder 91, drücken die Nasen 23' die ersten Steuemocken 37b in Umfangsrichtung von sich weg. Die Länge der Nockenführung 89 ist auf die durch die Taumelbewegung des Getriebebeschlags 11 bestimmte, maximale Relativbewegung abgestimmt. Damit wird eine Beschädigung vermieden.

### Bezugszeichenliste

- 1: Fahrzeugsitz
- 2: Lehne
- 3: Sitzteil
- 5: Beschlag
- 7: Handrad
- 8: Beschlagoberteil
- 9: Beschlagunterteil
- 11: Getriebebeschlag
- 12: erster Mitnehmer
- 13: Keilsegment
- 14: Ringfeder
- 15: Gleitlagerbuchse
- 17: erstes Getriebebeschlagteil
- 18: zweites Getriebebeschlagteil
- 20: Rastbeschlag
- 21: erstes Rastbeschlagteil
- 22: zweites Rastbeschlagteil
- 23: Riegel
- 23': Nase
- 24: zweiter Mitnehmer
- 25: Feder
- 26: Betätigungsring
- 27: Betätigungshebel
- 28: Steuerscheibe
- 30: Umklammerungsring
- 32: Steuereinrichtung
- 34: Exzenterbuchse
- 35: Ritzel
- 36,36a,36b: Zahnring
- 37, 37a, 37b: erster Steuernocken
- 38: Steuerring
- 39: zweiter Steuernocken
- 41: erster Teilumklammerungsring
- 42: zweiter Teilumklammerungsring
- 46: Verlängerungsbuchse
- 48: Befestigungslasche
- 49: Totpunktfeder
- 87: Anlaufschräge
- 89: Nockenführung
- 91: Nockenfeder
- A: erste Achse
- B: zweite Achse

## Patentansprüche

1. Beschlag für einen Fahrzeugsitz, insbesondere für einen Kraftfahrzeugsitz, mit wenigstens den Funktionsteilen zweier für sich voll funktionsfähiger, benachbarter Einzelbeschläge (11, 20), welche zwei zueinander parallele Achsen (A, B) definieren und bezüglich einer gemeinsamen ersten Achse (A) axial versetzt zueinander angeordnet sind, wobei als Einzelbeschläge (11, 20) ein Getriebebeschlag (11) und ein Rastbeschlag (20) vorgesehen sind, wobei der Getriebebeschlag (11) und der Rastbeschlag (20) jeweils ein erstes und ein zweites Beschlagteil (17, 18, 21, 22) aufweisen, **dadurch gekennzeichnet, dass** eine Steuereinrichtung (32) vorgesehen ist, welche das Verriegeln des Rastbeschlags (20) in Abhängigkeit der Winkelstellungen der Beschlagteile (17, 18, 21, 22) relativ zueinander steuert, und welche Mittel, insbesondere ein Planetengetriebe, zum Ausgleich einer Taumelbewegung des Getriebebeschlags (11) aufweist.

2. Beschlag nach Anspruch 1, **dadurch gekennzeichnet, dass** das zweite Getriebebeschlagteil (18) und das zweite Rastbeschlagteil (22) drehfest miteinander verbunden sind.

3. Beschlag nach Anspruch 1 und 2, **dadurch gekennzeichnet, dass** die Steuereinrichtung (32) Ringe (36, 38; 36a; 36b) aufweist, welche mittels Steuernocken (37, 39; 37a; 37b) mit den vorgesehenen Riegeln (23), insbesondere deren Nasen (23'), des Rastbeschlags (20) zusammenwirken, wobei einer der Ringe (36; 36a; 36b) durch die Mittel zum Ausgleich der Taumelbewegung in konstanter Winkelstellung zum ersten Getriebebeschlagteil (17) des Beschlags (5) gehalten wird, während ein anderer der Ringe (38) in konstanter Winkelstellung zum zweiten Getriebebeschlagteil (18) bleibt.

4. Beschlag nach Anspruch 3, **dadurch gekennzeichnet, dass** wenigstens ein Steuernocken (37a; 37b) flexibel und/oder beweglich an dem zugeordneten Ring (36a; 36b) angeordnet oder ausgebildet ist, insbesondere axial und/oder in Umfangsrichtung.

5. Beschlag nach einem der vorhergehenden Ansprüche, **dadurch gekennzeichnet, dass** eine mit dem zweiten Getriebebeschlagteil (18) oder dem zweiten Rastbeschlagteil (22) verbundene Verlängerungsbuchse (46) vorgesehen ist, welche zum Einhängen einer Totpunktfeder (49) dient, die an ihrem anderen Ende in Verbindung mit dem ersten Rastbeschlagteil (21) steht.

6. Beschlag nach einem der Ansprüche 1 bis 5, **dadurch gekennzeichnet, dass** ein gemeinsamer Umklammerungsring (30) vorgesehen ist, welcher die Einzelbeschläge (11, 20) umschließt und/oder übergreift.

7. Beschlag nach einem der Ansprüche 1 bis 5, **dadurch gekennzeichnet, dass** für jeden Einzelbeschlag (11, 20) eigene Teilumklammerungsringe (41, 42) oder - segmente vorgesehen sind, welche jeweils die ihnen zugeordneten Einzelbeschläge (11, 20) umschließen und/oder übergreifen.

8. Fahrzeugsitz mit einem Sitzteil (3) und einer Lehne (2), welche mittels zweier Beschläge nach einem der vorhergehenden Ansprüche relativ zum Sitzteil (3) zwischen Gebrauchsstellungen neigungseinstellbar und in wenigstens eine Nichtgebrauchsstellung schwenkbar ist.

## Claims

1. A fitting for a vehicle seat, in particular for a motor vehicle seat, having at least the functional parts of two by themselves fully functional, adjacent single fittings (11, 20) that define two parallel axes (A, B) and that are axially offset from each other in relation to a common first axis (A), wherein a geared fitting (11) and a detent fitting (20) are provided as single fittings (11, 20), wherein the geared fitting (11) and the detent fitting (20) comprise a first and a second fitting part (17, 18, 21, 22) each, a control device (32) is provided which controls the locking of the detent fitting (20) as function of the angular positions of the fitting parts (17, 18, 21, 22) relative to each other and which comprises means, in particular a planetary gear system, in order to compensate for the wobble motion of the geared fitting (11).

2. A fitting according to Claim 1, **characterized in that** the second geared fitting part (18) and the second detent fitting part (22) are connected to each other in a rotationally rigid manner.

3. A fitting according to Claims 1 and 2, **characterized in that** the control device (32) comprises rings (36, 38; 36a; 36b) that cooperate by means of control cams (37, 39; 37a, 37b) with the locking elements (23) provided, in particular with the lugs (23') thereof, in the detent fitting (20), wherein one of the rings (36; 36a; 36b) is held at a constant angular position relative to the first geared fitting part (17) of the fitting (5) by the means for compensating for the wobble motion, while another of the rings (38) remains at a constant angular position relative to the second geared fitting part (18).

4. A fitting according to Claim 3, **characterized in that** at least one control cam (37a; 37b) is flexibly and/or movably arranged or formed, in particular axially and/or in the circumferential direction, on the associated ring (36a; 36b).

5. A fitting according to one of the preceding claims, **characterized in that** an extension bushing (46) is provided that is connected to the second geared fitting part (18) or to the second detent fitting part (22) and acts as an attachment point for a dead-center spring (49) which, at its other end, is connected to the first detent fitting part (21).

6. A fitting according to one of Claims 1 to 5, **characterized in that** a common enclosing ring (30) is provided that encloses and/or clasps the single fittings (11, 20).

7. A fitting according to one of Claims 1 to 5, **characterized in that** each single fitting (11, 20) is provided with its own partially enclosing rings (41, 42) or segments that in each case enclose and/or fit over the associated single fittings (11, 20).

8. A vehicle seat having a seat part (3) and a backrest (2) that can be inclined between use positions and is pivotable into at least one non-use position relative to the seat part (3) by means of two fittings according to one of the preceding claims.

## Revendications

1. Armature pour un siège de véhicule, en particulier pour un siège de véhicule automobile, avec au moins les parties fonctionnelles de deux armatures individuelles (11, 20) voisines, entièrement fonctionnelles en tant que telles, lesquelles définissent deux axes (A, B) parallèles entre eux et sont disposées décalées l'une l'autre axialement par rapport à un premier axe commun (A), une armature d'entraînement (11) et une armature de verrouillage (20) étant prévues comme armatures individuelles (11, 20), l'armature d'entraînement (11) et l'armature de verrouillage (20) présentant chacune une première et une deuxième partie d'armature (17, 18, 21, 22),
**caractérisée par le fait qu'**il est prévu un dispositif de commande (32), lequel commande le verrouillage de l'armature de verrouillage (20) en fonction des positions angulaires des parties d'armature (17, 18, 21, 22) les unes par rapport aux autres, et lequel présente des moyens, en particulier un engrenage planétaire, de compensation d'un mouvement de nutation de l'armature d'entraînement.

2. Armature selon la revendication 1, **caractérisée par le fait que** la deuxième parie d'armature d'entraînement (18) et la deuxième partie d'armature de verrouillage (22) sont liées l'une à l'autre de façon solidaire en rotation.

3. Armature selon l'une des revendications 1 et 2, **caractérisée par le fait que** le dispositif de commande (32) présente des bagues (36, 38 ; 36a ; 36b), lesquelles coopèrent au moyen de cames de commande (37, 39 ; 37a, 37b) avec les verrous (23) prévus, en particulier leurs taquets (23'), de l'armature de verrouillage (20), l'une des bagues (36 ; 36a ; 36b) étant maintenue par les moyens de compensation du mouvement de nutation en position angulaire constante par rapport à la première partie d'armature d'entraînement (17) de l'armature (5) pendant qu'une autre des bagues (38) reste en position angulaire constante par rapport à la deuxième partie d'armature d'entraînement (18).

4. Armature selon la revendication 3, **caractérisée par le fait qu'**au moins une came de commande (37a, 37b) est disposée ou réalisée de façon flexible et /ou mobile sur la bague associée (36a, 36b), en particulier axialement et /ou dans la direction périphérique.

5. Armature selon l'une des revendications précédentes, **caractérisée par le fait qu'**une douille de prolongement (46) liée avec la deuxième partie d'armature d'entraînement (18) ou avec la deuxième partie d'armature de verrouillage (22) est prévue, laquelle sert pour la suspension d'un ressort à point mort (49), qui se trouve à son autre extrémité en liaison avec la première partie d'armature de verrouillage (21).

6. Armature selon l'une des revendications 1 à 5, **caractérisée par le fait qu'**une bague d'enserrage commune (30) est prévue, laquelle entoure et /ou saisit les armatures individuelles (11, 20).

7. Armature selon l'une des revendications 1 à 5, **caractérisée par le fait que**, pour chaque armature individuelle (11, 20), est prévu sa propre bague (41, 42) ou son propre segment d'enserrage partiel, chacun desquels entoure et/ou saisit l' armature individuelle (11, 20) qui lui est associée.

8. Siège de véhicule avec une partie de siège (3) et un dossier (2), lequel est réglable en inclinaison au moyen de deux armatures telles que définies à l'une des revendications précédentes par rapport à la partie de siège (3) entre des positions d'utilisation et est pivotant dans au moins une position de non-utilisation.
